# EUROPÄISCHE PATENTANMELDUNG

(11) **EP 2 211 151 A1**
(43) Veröffentlichungstag der Anmeldung: **28.07.2010**
(21) Anmeldenummer: 10150826.5
(22) Anmeldetag: 15.01.2010
(51) Int. Cl.: G01F 11/26

(54) **Verschluss zum Ausgiessen von dosierten Flüssigkeitsportionen aus einem Behälter**

(30) Priorität: 19.01.2009 CH 742009
(71) Anmelder: Medisize Schweiz AG, 8309 Nürensdorf (CH)
(72) Erfinder: Veit, Dieter, 8595 Altnau (CH)
(74) Vertreter: Felber, Josef

(57) **Zusammenfassung**

Der Verschluss (1) dient zum Ausgiessen von dosierten Flüssigkeitsportionen aus einem Behälter (2). Er besteht aus einer über einen Behälterstutzen (10) steck- oder schraubaren Muffe (3), die oben über eine Brücke (4) mit einem Nippel (5) verbunden ist. Dieser ragt in den Behälterstutzen (10) hinein. Ausserdem besteht der Verschluss aus einer Membran (7), die über ein federndes Element (8) am Nippel (5) gehalten ist. Der Nippel (5) wird von unten kraft des federnden Elementes (8) dichtend von der Membran (7) verschlossen. Die Membran (7) formt auf ihrer Oberseite einen Stössel (9), welcher den Nippel (5) oben überragt. Am oberen Rand der Muffe (3) ist ein Kappendeckel (6) über ein Scharnier (18) angeformt, welcher Kappendeckel (6) eine elastische Kuppel (13) bildet. Durch elastisches Eindrücken derselben bei geschlossenem Kappendeckel (6) wird der Stössel (9) gegen die Kraft des Federelements (8) nach unten gedrückt, sodass die Membran (7) vom Nippelrand abgehoben wird.

## Beschreibung

Die Erfindung betrifft einen Verschluss zum Ausgiessen von dosierten Flüssigkeitsportionen aus einem Behälter. Bei diesem Behälter kann es sich zum Beispiel um eine Glas- oder Kunststoff-Flasche handeln, etwa eine PET-Flasche, aber auch um einen Kunststoffbehälter mit Stutzen oder um eine Kartonverpackung mit einem Kunststoff-Ausgiesserstutzen.

Es sind verschiedene Verschluss-Lösungen bekannt, welche ein dosiertes Ausgiessen einer Flüssigkeit aus einem Behälter ermöglichen sollen. Diese Lösungen sind in der Handhabung noch zu wenig praktisch oder aber sie sind in der Herstellung aufwändig, indem sie aus einer Vielzahl von Teilen bestehen oder entsprechend aufwändige Montagearbeiten nötig machen.

Die Aufgabe der vorliegenden Erfindung ist es deshalb, einen möglichst einfach konstruierten, sicher funktionierenden und einfach zu bedienenden Verschluss anzugeben, welcher das Ausgiessen von dosierten Flüssigkeitsportionen aus einem Behälter ermöglicht.

Diese Aufgabe wird gelöst von einem Verschluss zum Ausgiessen von dosierten Flüssigkeitsportionen aus einem Behälter, bestehend aus einer über einen Behälterstutzen steck- oder schraubbaren Muffe, die oben über eine Brücke mit einem Nippel verbunden ist, welcher in den Behälterstutzen hineinragt, sowie einer Membran, die über ein federndes Element am Nippel gehalten ist, sodass sie den Nippel von unten kraft des federnden Elementes dichtend verschliesst, wobei die Membran auf ihrer Oberseite einen Stössel formt, welcher den Nippel oben überragt, und wobei am oberen Rand der Muffe ein Kappendeckel über ein Scharnier angeformt ist, welcher eine elastische Kuppel bildet, durch elastisches Eindrücken derselben bei geschlossenem Kappendeckel der Stössel gegen die Kraft des Federelements nach unten drückbar ist, sodass die Membran vom Nippelrand abhebbar ist.

Anhand der Zeichnungen wird dieser Verschluss nachfolgend beschrieben und seine Funktion wird schrittweise erläutert.
Es zeigt:
- Figur 1:: Den Verschluß auf einen Behälter montiert in geschlossener Lage in einem Längsschnitt dargestellt;
- Figur 2:: Den Verschluß mit Behälter in gestürzter Lage des Behälters in einem Längsschnitt beim Dosieren einer auszugebenden Portion;
- Figur 3:: Den Verschluß und den Behälter in einem Längsschnitt mit dosierter Ausgabeportion und geöffneter Verschlusskappe, bereit zum Ausgiessen der Ausgabeportion;
- Figur 4:: Eine zweite Variante des Verschlusses mit kleinerem Volumen der Ausgabeportion.

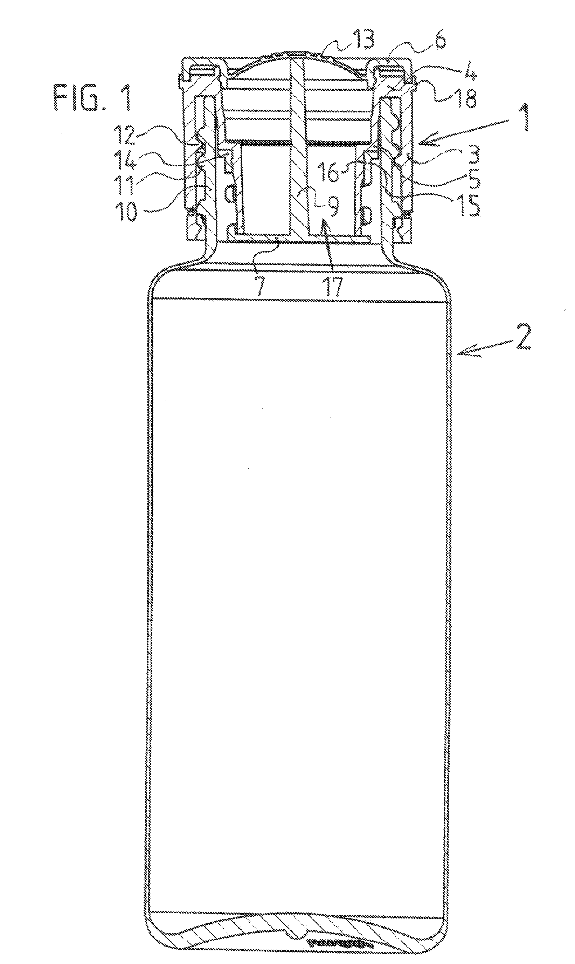

In Figur 1 ist der Verschluß 1 auf einen Behälter 2 montiert gezeigt, in geschlossener Lage des Verschlusses. Die Darstellung zeigt einen Längsschnitt durch den Verschluß 1 und den Behälter 2. Der Verschluß 1 besteht einzig aus zwei Teilen, nämlich einer Muffe 3, die oben über eine Brücke 4 in einen Nippel 5 überführt, wobei am oberen Muffenrand ein Kappendeckel 6 scharnierend angeformt ist, sowie als zweites Teil einer Membran 7, an welcher einerseits ein federndes Element 8 angeformt ist, sowie andrerseits ein Stößel 9 angeformt ist. Der Verschluß 1 wird mit seiner Muffe 3 auf den Stutzen 10 eines Behälters 1 aufgesteckt oder aufgeschraubt. Je nach Ausführung ist die Außenseite des Stutzens 10 hierzu mit Rillen versehen, welche zum Beispiel das Aufprellen der Muffe 3 ermöglichen. In der hier gezeigten Ausführung weist der Stutzen 10 ein Aussengewinde 11 auf, über welches die Muffe 3 des Verschlusses mit ihrem Innengewinde 12 aufgeschraubt ist. Am oberen Rand der Muffe 3 erkennt man die Brücke 4, welche nach innen gerichtet ist und also einen Ring bildet, welcher auf dem oberen Stutzenrand aufliegt. An der Innenseite des Ringes schließt ein Nippel 5 an, der im Innern des Stutzens 10 nach unten ragt. Mindestens über einen Teil seiner Länge ragt dieser Nippel 5 hier frei hängend im Stutzeninnern, so daß also außerhalb seiner unteren Außenfläche ein Freiraum bleibt. Das Innere dieses Nippels 5 dient als Dosier- oder Portionierkammer, wie das noch klar wird. Oben am Ring, welcher die Brücke 4 bildet ist über ein Scharnier 18 ein Kappendeckel 6 angeformt. Über die lichte Weite des Nippels bildet dieser Kappendeckel 6 eine nach oben gewölbte Kuppel 13. Aufgrund der dünnen Materialdicke ist diese Kuppel 13 am Kappendeckel 6 elastisch deformierbar. Unten ist der Nippel 5 von einer auf seinem unteren Rand aufliegenden Membran 7 dichtend verschlossen. Am äußeren Rand der Membran 7 führt diese in ein federndes Element 8 über, welches schraubenlinienförmig die Außenseite des Nippels 5 umschlingt und an seinem oberen Ende in einen Ring 14 einmündet, welcher den Nippel 5 rundum umschliesst. Längs der Innenseite dieses Ringes 14 ist eine Nut 15 ausgenommen, in welche eine umlaufende Rille 16 an der Außenseite des Nippels 5 zu liegen kommt. Der Ring 14 kann von unten über den Nippel 5 gestülpt werden, bis die Rille 15 am Nippel 5 in die Nut 15 im Ring 14 einschnappt. Dann ist der Ring 14 und somit das federnde Element 8 wie auch die daran hängende Membran 7 am Nippel 5 gehalten. Auf der Oberseite der Membran 7 erstreckt sich in ihrem Zentrum ein Stößel 9 nach oben. Er ist so lang ausgeführt, dass er den Nippel 5 oben ein stückweit überragt, wie man das in der Figur 1 erkennt. In der hier gezeigten Lage ist der Verschluß geschlossen, das heisst der Kappendeckel 6 mit seiner Kuppel 13 ist zugeklappt und liegt auf der Brücke 4 auf. In dieser Position ist der Kappendeckel 6 in üblicher Weise mittels eines Schnappmechanismus gehalten. Die Kuppel 13 erstreckt sich über das obere Ende des Stößels 9, läßt aber einen knappen Freiraum oberhalb des Stößels frei. In dieser gezeigten Lage wirkt die Kammer 17 oberhalb der Membran 7 und im Innern des Nippels 5 als Dosier- oder Portionierkammer. Die Membrane 7 wird vom federnden Element 8 unter Spannung nach oben gezogen, so daß sie dichtende auf dem unteren Rand des Nippels 5 aufliegt. Daher ist ein flüssiger Inhalt im Innern des Nippels 5 dichtend gehalten und eingeschlossen. In demontiertem Zustand der Membran 7 liegt die Membran 7 - in entspanntem Zustand des federnden Elementes 8 - nahe beim Ring 14 am oberen Ende des federnden Elementes. Der Ring 14 und die Membran 7 können gegen die Kraft dieses federnden Elementes 8 voneinander weg gespannt werden. Daher wird in der hier gezeigten Lage die Membran 7 infolge der vom federnden Element 8 ausgehenden Zugspannung auf die Unterseite des Nippels 5 gepresst, wodurch die Dichtwirkung dauerhaft erzeugt wird.

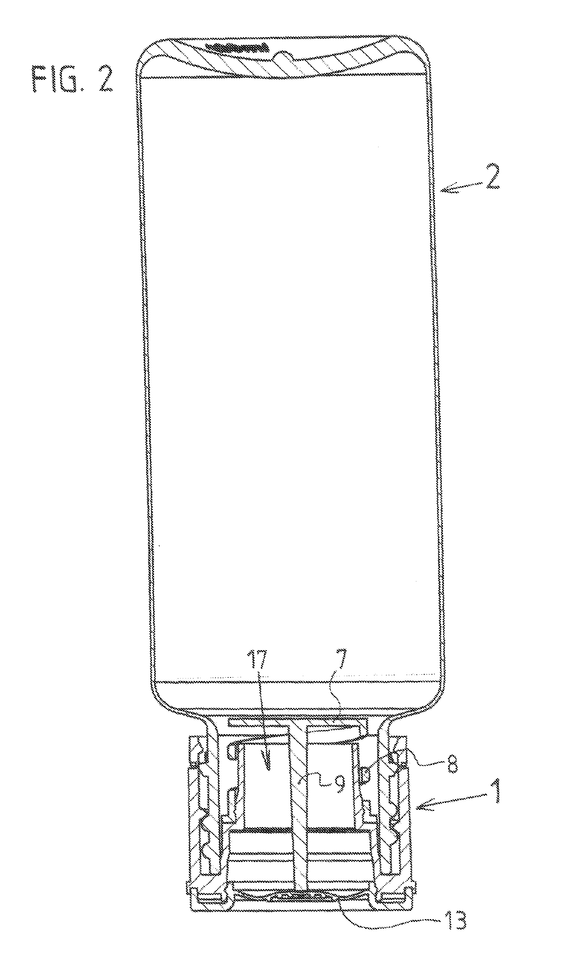

Ausgehend aus der in Figur 1 gezeigten Ausgangslage mit leerer Dosierkammer 17 gilt es zunächst, dieselbe zu füllen. Das geschieht in der gestürzten Lage des Behälters 2, wie diese in Figur 2 dargestellt ist. Sobald der Behälter 2 gestürzt ist, wird am geschlossenen Verschluß 1 von unten auf die Kuppel 13 gedrückt, etwa mit dem Daumen oder einem Finger. Die Kuppel 13 lässt sich elastisch eindrücken, wodurch der Stössel 9 im Innern des Verschlusses nach oben geschoben wird, gegen die Kraft des federnden Elements 8. Dadurch wird die Membran 7 vom Nippelrand abgehoben und Flüssigkeit kann durch den freigegebenen Zwischenraum in das Innere des Nippels 5, das heisst in die von ihm gebildete Dosierkammer 17 einströmen. Dieses Einströmen erfolgt, bis die Dosierkammer 17 vollständig gefüllt ist, wobei die vorher darin befindliche Luft im Behälter in Richtung des Behälterbodens aus der Dosierkammer entweicht. Sobald die Dosierkammer 17 gefüllt ist, wird die Kuppel 13 losgelassen, so daß sie elastisch in ihre Ausgangsposition zurückgeht. Dadurch wird die Membrane 7 durch das federnden Element 8 wieder auf den Nippelrand gezogen und die Dosierkammer 17 ist dann dichtend verschlossen.

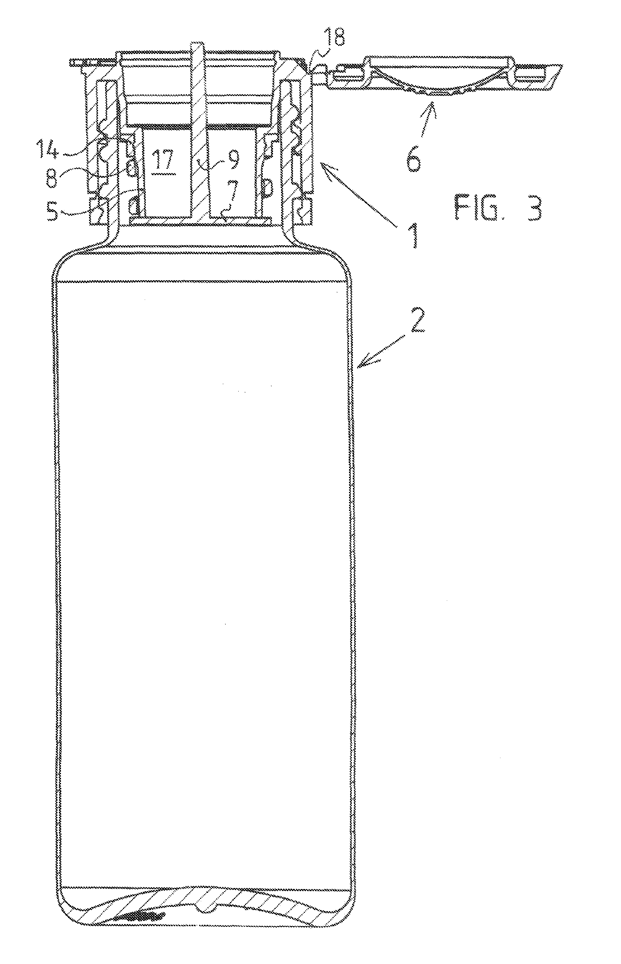

Jetzt wird der Behälter 2 die aufrechte Ausgangslage zurückgeschwenkt. Im nächsten Schritt wird der Kappendeckel 6 um das Scharnier 18 aufgeschwenkt, wie das in Figur 3 gezeigt ist. Dann ist der Verschluß 1 mit seiner dosierten Inhaltsportion in seinem Innern zum Ausgiessen bereit. Der Behälter 2 wird in Ausgiesslage geschwenkt und der Inhalt wird aus der Dosierkammer 17 ausgegossen. Danach ist er für eine weitere Dosierung einer Ausgabeportion bereit.

Die Membrane 7 mit ihrem Stößel 9, federnden Element 8 und dem daran angeformten Ring 14 besteht aus einem einzigen gummielastischen Kunststoff oder aber aus einem elastischen Kunststoff, wobei die dichtende Seite der Membran 7 mit einem Gummi oder einem gummiartigen Material beschichtet sein kann. Allerdings hat es sich gezeigt, dass dies nicht unbedingt nötig ist. Anstatt dass das federnde Element 8 den Nippel 5 außen umschlingt, kann die Membran 7 in gleicher Weise auch auf der Innenseite des Nippels 5 gehalten sein, indem das federnde Elemente 8 auf der Nippelinnenseite nach oben führt und in ein ringförmiges Element mündet, das zum Beispiel auf einer inneren Schulter im Nippel 5 aufliegt. Damit das ringförmige Element montiert werden kann, kann es einen unterbrochenen Ring bilden, so daß dieser zum Beispiel nicht ganz um 360° geführt ist, sondern einen Spalt freilässt. So kann dieses Element zu einem kleineren Durchmesser zusammengedrückt werden und über die Schulter geklickt werden.

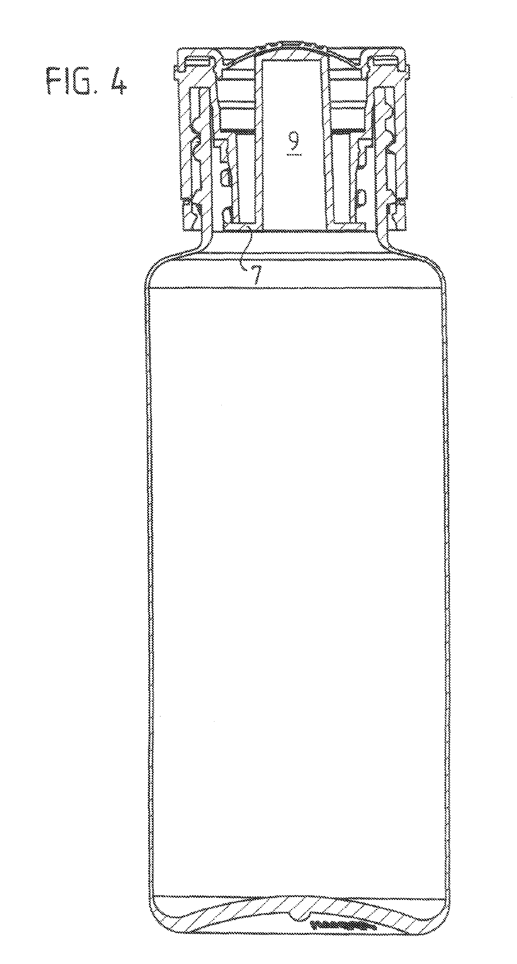

Die Figur 4 zeigt eine zweite Variante des Verschlusses mit kleinerem Volumen der Dosierkammer. Diese Volumenreduktion wird hier durch eine dickere Ausführung des Stößels 9 erreicht, der im gezeigten Beispiel hohl ist, wobei der Hohlraum von der Unterseite der Membrane 7 her zugänglich ist. Die dosierbaren bzw. portionierbaren Volumina bewegen sich typischerweise zwischen 2 bis 20ml, wobei aber die Erfindung nicht auf diese Volumina beschränkt ist.

Dieser Verschluß wie vorgestellt besteht aus einzig zwei Spritzteilen, deren Zusammenbau außerdem sehr einfach ist. Damit ist dieser Verschluß kostengünstig in der Herstellung, und erlaubt eine höchst einfache und sichere Handhabung für das Dosieren von ganz bestimmten Ausgabeportionen von flüssigen Substanzen.

## Patentansprüche

1. Verschluss (1) zum Ausgiessen von dosierten Flüssigkeitsportionen aus einem Behälter (2), bestehend aus einer über einen Behälterstutzen (10) steck- oder schraubaren Muffe (3), die oben über eine Brücke (4) mit einem Nippel (5) verbunden ist, welcher in den Behälterstutzen (10) hineinragt, sowie einer Membran (7), die über ein federndes Element (8) am Nippel (5) gehalten ist, sodass sie den Nippel (5) von unten kraft des federnden Elementes (8) dichtend verschliesst, wobei die Membran (7) auf ihrer Oberseite einen Stössel (9) formt, welcher den Nippel (5) oben überragt, und wobei am oberen Rand der Muffe (3) ein Kappendeckel (6) über ein Scharnier (18) angeformt ist, welcher eine elastische Kuppel (13) bildet, durch elastisches Eindrücken derselben bei geschlossenem Kappendeckel (6) der Stössel (9) gegen die Kraft des Federelements (8) nach unten drückbar ist, sodass die Membran (7) vom Nippelrand abhebbar ist.

2. Verschluss (1) zum Ausgiessen von dosierten Flüssigkeitsportionen aus einem Behälter (2) nach Anspruch 1, **dadurch gekennzeichnet, dass** das federnde Element (8) ein Element ist, das den Nippel (5) auf seiner Außenseite schraubenlinienförmig umschlingt und oben in einen Ring (14) mündet, welcher am Nippel (5) über eine Einschnapp-Verbindung gehalten ist.

3. Verschluss (1) zum Ausgiessen von dosierten Flüssigkeitsportionen aus einem Behälter (2) nach Anspruch 1, **dadurch gekennzeichnet, dass** das federnde Element (8) ein Element ist, das längs der Innenseite des Nippels (5) schraubenlinienförmig nach oben nachgeführt ist und in ein ringförmiges Element einmündet, welches auf einer innern Schulter am Nippel (5) aufliegt.

4. Verschluss (1) zum Ausgiessen von dosierten Flüssigkeitsportionen aus einem Behälter (2) nach einem der Ansprüche 1 bis 3, **dadurch gekennzeichnet, dass** die Membran (7) mit Stößel (9) und federndem Element (8) mit Ring (14) aus einem gummielastischen Material gespritzt ist.

5. Verschluss (1) zum Ausgiessen von dosierten Flüssigkeitsportionen aus einem Behälter (2) nach einem der Ansprüche 1 bis 3, **dadurch gekennzeichnet, dass** die Membran (7) mit Stößel (9) und federndem Element (8) mit Ring (14) aus einem Kunststoff gespritzt ist, wobei die Oberseite der Membrane mit einem Spritzgummi beschichtet ist.

6. Verschluss (1) zum Ausgiessen von dosierten Flüssigkeitsportionen aus einem Behälter (2) nach einem der vorangehenden Ansprüche, **dadurch gekennzeichnet, dass** der Kappendeckel (6) in zwei Komponenten gespritzt ist, indem die Kuppel (13) aus einem gesonderten gummielastischen Material angespritzt ist.
